# DEMANDE DE BREVET EUROPEEN

(11) **EP 4 851 028 A1**
(43) Date de publication de la demande: **09.12.2026**
(21) Numéro de dépôt: 26171737.5
(22) Date de dépôt: 10.04.2026
(51) Int. Cl.: B62J 9/40

(54) **DISPOSITIF DE RANGEMENT D OUTIL POUR UN VÉHICULE À AU MOINS TROIS ROUES**

(30) Priorité: 05.06.2025 FR 2506115
(71) Demandeur: Stellantis Auto SAS, 78300 Poissy (FR)
(72) Inventeur: JIRRI, HAMZA, 20270 CASABLANCA (MA); EL AKRAA, MOHAMED CHAFIK, 20270 CASABLANCA (MA)
(74) Mandataire: BCIP

(57) **Abrégé**

Un dispositif de rangement (DR) équipe un véhicule (V) comprenant au moins trois roues et un plancher sur lequel sont installées des premières parois (P1) délimitant un logement (LR) logeant des équipements. Ce dispositif de rangement (DR) comprend un contenant (CR) logeant au moins un outil, et au moins un élément de couplage (EC) couplé à un élément de fixation (EF) installé fixement dans le logement (LR) afin de le solidariser à cet élément de fixation (EF).

## Description

### Domaine technique de l'invention

L'invention concerne les véhicules comprenant au moins trois roues et un plancher sur lequel des premières parois délimitent un logement logeant des équipements, et plus précisément les dispositifs de rangement qui sont destinés à équiper de tels véhicules.

### Etat de la technique

Certains véhicules terrestres à au moins trois roues, généralement de type utilitaire (comme par exemple des triporteurs (ou tricycles) motorisés), comprennent un plancher sur lequel sont installées des premières parois délimitant un logement logeant des équipements et ayant éventuellement une face supérieure masquée par une seconde paroi participant à la définition d'une assise permettant à leur conducteur de s'asseoir pour les conduire.

Ces véhicules terrestres sont habituellement équipés d'au moins un outil, comme par exemple un cric associé à une manivelle, destiné à permettre leur dépannage en cas de petit problème (comme par exemple une crevaison). Lorsque l'espace disponible est très restreint et/ou difficile d'accès, comme c'est le cas dans un triporteur, l'outil (par exemple le cric et sa manivelle) est généralement installé sous la benne ou sur le châssis arrière ou encore dans l'habitacle. De ce fait, l'outil est généralement peu accessible et/ou exposé au vol et/ou réduit l'habitabilité.

Il est certes possible de placer l'outil dans le logement précité, dans un espace libre. Cependant, les vibrations et les chocs risquent de le faire bouger, ce qui peut endommager au moins un équipement logé dans ce logement ou provoquer un court-circuit en cas de contact avec un équipement électrique (comme par exemple une batterie).

L'invention a donc notamment pour but d'améliorer la situation.

### Présentation de l'invention

Elle propose notamment à cet effet un dispositif de rangement, d'une part, propre à équiper un véhicule comprenant au moins trois roues et un plancher sur lequel sont installées des premières parois délimitant un logement logeant des équipements, et, d'autre part, comprenant un contenant propre à loger au moins un outil.

Ce dispositif de rangement se caractérise par le fait qu'il comprend en outre au moins un élément de couplage propre à être couplé à un élément de fixation installé fixement dans le logement du véhicule afin de solidariser le dispositif de rangement à cet élément de fixation.

Ainsi, l'outil ne risque plus de réduire l'habitabilité et, en présence de vibrations et/ou de chocs, de bouger dans le logement LR et donc d'endommager un équipement logé dans ce dernier ou de provoquer un court-circuit, et de surcroît il est facile d'y accéder.

Le dispositif de rangement selon l'invention peut comporter d'autres caractéristiques qui peuvent être prises séparément ou en combinaison, et notamment :
- il peut comprendre deux éléments de couplage ;
- dans un premier mode de réalisation, chaque élément de couplage peut être une sangle ;
- dans ce premier mode de réalisation, la (chaque) sangle peut être propre à entourer le contenant de manière à participer à sa fermeture ;
- dans un second mode de réalisation, chaque élément de couplage peut être un crochet ;
- l'outil peut être un cric associé à une manivelle.

L'invention propose également un véhicule comprenant, d'une part, au moins trois roues et un plancher sur lequel sont installées des premières parois délimitant un logement logeant des équipements, et, d'autre part, un dispositif de rangement du type de celui présenté ci-avant et logé dans ce logement en étant solidarisé à cet élément de fixation.

Le véhicule selon l'invention peut comporter d'autres caractéristiques qui peuvent être prises séparément ou en combinaison, et notamment :
- son élément de fixation peut être une barre, éventuellement installée suivant une direction longitudinale du véhicule ;
- il peut comprendre, dans une partie supérieure de son logement, un cadre auquel sont solidarisés fixement l'élément de fixation et les premières parois ;
- en présence de la dernière option, le logement peut avoir une face supérieure masquée par une seconde paroi participant à la définition d'une assise et montée à rotation sur le cadre ;
- en présence de la dernière sous-option, il peut comprendre au moins un élément de verrouillage propre, lorsque la seconde paroi est placée dans une position rabattue contre le cadre, à verrouiller cette seconde paroi dans cette position rabattue ;
- également en présence de la dernière option, il peut comprendre un châssis, et dans ce cas le cadre peut faire partie de ce châssis ;
- il peut constituer un triporteur motorisé.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté avant, une partie d'un exemple de véhicule comportant un exemple de réalisation d'un dispositif de rangement selon l'invention installé dans un logement visible du fait du placement de la seconde paroi (d'assise) en position redressée,
[Fig. 2] illustre schématiquement, dans une vue en perspective du côté avant, une partie du logement du véhicule de la figure 1 dans laquelle est installé le dispositif de rangement,
[Fig. 3] illustre schématiquement, dans une vue en perspective de côté, le dispositif de rangement des figures 1 et 2, et
[Fig. 4] illustre schématiquement, dans une vue en perspective de côté, le dispositif de rangement des figures 1 et 2, avec son contenant matérialisé en transparence afin de rendre visible l'outil qu'il loge.

### Description détaillée de l'invention

L'invention a notamment pour but de proposer un dispositif de rangement DR destiné à équiper un véhicule V à au moins trois roues RV et permettant d'installer de façon sécurisée, dans un logement LR (éventuellement à accès contrôlé par une seconde paroi (d'assise) P2), au moins un outil OV.

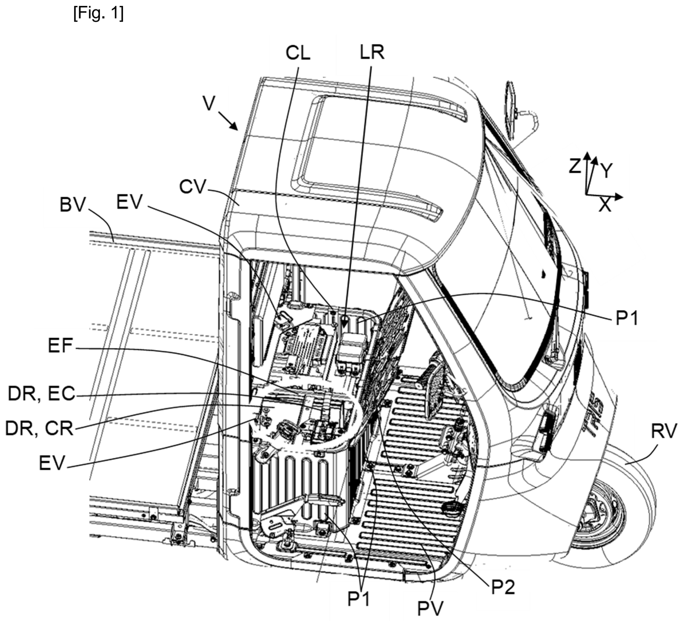

Dans ce qui suit, on considère, à titre d'exemple non limitatif, que le véhicule V à au moins trois roues RV est de type utilitaire, et plus précisément qu'il s'agit d'un triporteur (ou tricycle) motorisé comme illustré non limitativement sur la figure 1. Mais l'invention n'est pas limitée à ce type de véhicule. Elle concerne en effet tout véhicule terrestre comprenant au moins trois roues et un plancher sur lequel sont installées des premières parois délimitant un logement logeant des équipements (et ayant éventuellement une face supérieure masquée par une seconde paroi participant à la définition d'une assise).

Sur les figures 1 à 4 la direction X est la direction longitudinale du véhicule V, laquelle est sensiblement parallèle aux côtés latéraux (ou longitudinaux), la direction Y est la direction transversale du véhicule V, laquelle est perpendiculaire à la direction longitudinale X, et la direction Z est la direction verticale du véhicule V, laquelle est perpendiculaire aux directions longitudinale X et transversale Y.

On a schématiquement illustré sur la figure 1 une partie d'un exemple de véhicule V (ici un triporteur motorisé) comportant un exemple de réalisation d'un dispositif de rangement DR selon l'invention. Bien que cela n'apparaisse que partiellement, le véhicule V comprend au moins trois roues RV et un plancher PV sur lequel sont installées (ici sensiblement verticalement) des premières parois P1 qui délimitent un logement LR dans lequel est installé (de façon amovible) le dispositif de rangement DR. On notera que dans l'exemple illustré non limitativement sur la figure 1 le véhicule V comprend aussi une cabine CV solidarisée à son plancher PV et délimitant un habitacle, et une benne arrière BV placée derrière le plancher PV et la cabine CV et destinée à recevoir des objets à transporter.

Par ailleurs, le logement LR loge des équipements et peut avoir, par exemple, une face supérieure masquée par une seconde paroi P2 participant à la définition d'une assise permettant au conducteur de s'asseoir pour conduire le véhicule V. Cette seconde paroi (d'assise) P2 permet donc de contrôler l'accès au logement LR.

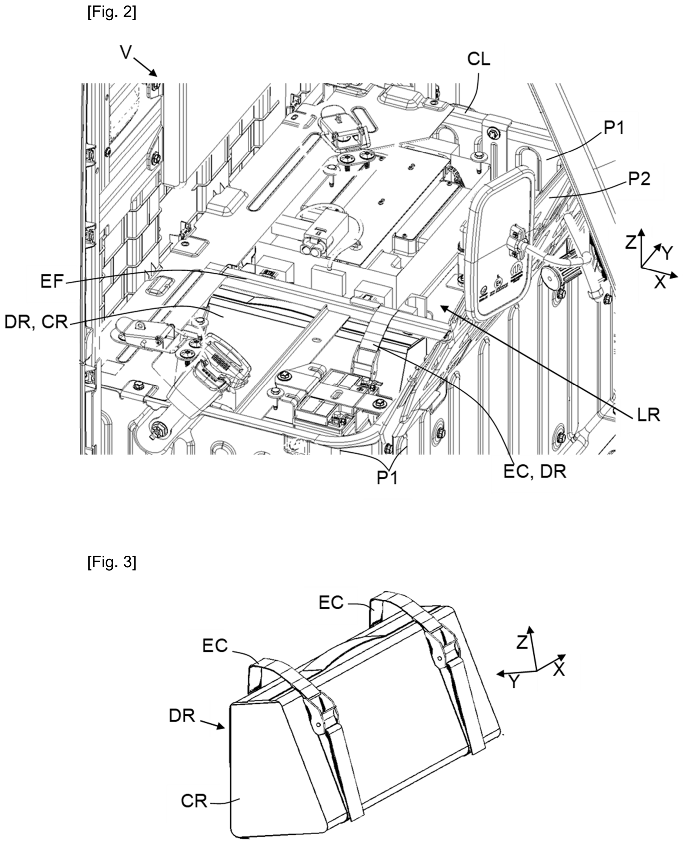

Par exemple, et comme illustré non limitativement sur les figures 1 et 2, cette éventuelle seconde paroi (d'assise) P2 peut être montée à rotation sur un cadre CL qui est installé dans une partie supérieure du logement LR et auquel sont solidarisées fixement les premières parois P1. On notera que dans l'exemple illustré non limitativement sur la figure 1 la seconde paroi (d'assise) P2 est montée à rotation sur la partie transversale avant du cadre CL (parallèle à la direction transversale Y). De ce fait, la seconde paroi (d'assise) P2 peut être placée dans une position redressée, illustrée sur les figures 1 et 2 et permettant l'accès au logement LR et donc aux équipements installés dedans (y compris le dispositif de rangement DR), ou dans une position rabattue contre le cadre CL, non illustrée, masquant le logement LR mais permettant au conducteur de s'asseoir pour conduire le véhicule V.

Comme illustré au moins partiellement sur les figures 1 et 2, un dispositif de rangement DR, selon l'invention, comprend un contenant CR et au moins un élément de couplage EC.

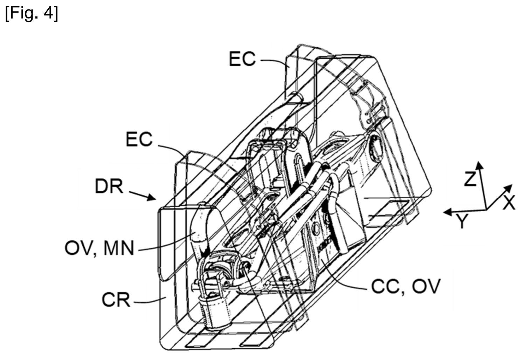

Le contenant CR est propre à loger au moins un outil OV (voir figure 4). Il s'agit par exemple d'un sac, réalisé dans un matériau résistant et éventuellement rigide (par exemple du fait d'éléments de rigidification installés fixement à l'intérieur), ou bien d'une boîte.

Par exemple, et comme illustré non limitativement sur la figure 4, l'outil OV peut être un cric CC associé à une manivelle MN. Mais il pourrait s'agir d'un outil d'un autre type. Par ailleurs, le contenant CR peut loger plusieurs (au moins deux) outils OV utiles au dépannage du véhicule V.

Le (chaque) élément de couplage EC est propre à être couplé à un élément de fixation EF qui est installé fixement dans le logement LR afin de solidariser son dispositif de rangement DR à cet élément de fixation EF.

L'outil OV étant désormais logé dans un contenant CR qui est solidarisé dans le logement LR, il ne risque plus, en présence de vibrations et/ou de chocs, de bouger à l'intérieur du logement LR et donc d'endommager un équipement logé dans ce logement LR ou de provoquer un court-circuit. De plus, l'accès à l'outil OV est désormais facile puisqu'il suffit de découpler le dispositif de rangement DR de l'élément de fixation EF, puis d'ouvrir le contenant CR. En outre, l'outil OV ne risque plus de réduire l'habitabilité puisqu'il est désormais rangé dans le logement LR.

Par exemple, et comme illustré non limitativement sur les figures 1 et 2, lorsque la seconde paroi (d'assise) P2 est montée à rotation sur le cadre CL, il est avantageux que le véhicule V comprenne au moins un élément de verrouillage EV qui est propre, lorsque la seconde paroi P2 est placée dans sa position rabattue contre ce cadre CL, à verrouiller cette seconde paroi P2 dans cette position rabattue. Cela permet de sécuriser l'accès à l'intérieur du logement LR et donc de réduire le risque de vol de l'outil OV.

On notera que dans l'exemple illustré non limitativement sur les figures 1 et 2 le véhicule V comprend deux éléments de verrouillage EV, mais il pourrait n'en comporter qu'un seul. De préférence, l'un au moins de ces éléments de verrouillage EV comprend une serrure actionnable par une clé éventuellement dédiée.

Egalement par exemple, et comme illustré non limitativement sur les figures 3 et 4, le dispositif de rangement DR peut comprendre deux éléments de couplage EC distants. Cela permet de renforcer l'immobilisation du contenant CR, et donc de l'outil OV, dans le logement LR. Mais le dispositif de rangement DR pourrait ne comprendre qu'un seul élément de couplage EC.

Egalement par exemple, et comme illustré non limitativement sur les figures 1 à 4, dans un premier mode de réalisation chaque élément de couplage EC peut être une sangle. Dans ce cas, la (chaque) sangle EC peut être propre à entourer le contenant CR de manière à participer à sa fermeture. Ainsi, la (chaque) sangle EC participe à la solidarisation du contenant CR à l'élément de fixation EF, mais aussi à la fermeture du contenant CR, ce qui est avantageux.

On notera que la (chaque) sangle EC peut éventuellement être solidarisée fixement sur la face extérieure du contenant CR, en au moins un endroit choisi (adapté à son couplage à l'élément de fixation EF).

Mais d'autres modes de réalisation d'un élément de couplage EC peuvent être envisagés. Ainsi, dans un second mode de réalisation chaque élément de couplage EC pourrait être un crochet, par exemple. On comprendra que le crochet EC est alors solidarisé fixement sur la face extérieure du contenant CR, en un endroit choisi (adapté à son couplage à l'élément de fixation EF).

Egalement par exemple, et comme illustré non limitativement sur les figures 1 et 2, l'élément de fixation EF peut être une barre (ou tige) qui est logée dans le logement LR. Dans ce cas, lorsque chaque élément de couplage EC est une sangle, cette dernière (EC) doit entourer au moins partiellement la barre EF pour solidariser le contenant CR, comme illustré sur les figures 1 et 2. On comprendra que c'est un usager du véhicule V qui fait passer la (chaque) sangle EC autour de la barre EF après avoir placé le contenant CR sous cette barre EF dans l'espace libre qui lui est dédié. Lorsque chaque élément de couplage EC est un crochet, ce dernier (EC) doit entourer au moins partiellement la barre EF ou bien être en partie logé dans un trou dédié correspondant et défini dans la barre EF, pour solidariser le contenant CR. On comprendra que c'est un usager du véhicule V qui fait passer le (chaque) crochet EC autour de la barre EF ou bien loge le (chaque) crochet EC dans le trou dédié de la barre EF après avoir placé le contenant CR sous la barre EF dans l'espace libre qui lui est dédié.

Egalement par exemple, et comme illustré non limitativement sur les figures 1 et 2, la barre EF peut être installée suivant la direction longitudinale X du véhicule V. Mais cela n'est pas obligatoire. Ainsi, elle pourrait être installée suivant la direction transversale Y du véhicule V, par exemple.

On notera également que la barre EF peut faire partie du châssis du véhicule V. Mais cela n'est pas obligatoire. En effet, la barre EF peut être une pièce dédiée au couplage du dispositif de rangement DR et rapportée dans le logement LR, en étant éventuellement solidarisée dans sa partie supérieure au cadre CL.

## Revendications

1. Dispositif de rangement (DR) propre à équiper un véhicule (V) comprenant au moins trois roues (RV) et un plancher (PV) sur lequel sont installées des premières parois (P1) délimitant un logement (LR) logeant des équipements, et comprenant un contenant (CR) propre à loger au moins un outil (OV), **caractérisé en ce qu'**il comprend en outre au moins un élément de couplage (EC) propre à être couplé à un élément de fixation (EF) installé fixement dans ledit logement (LR) afin de solidariser ledit dispositif de rangement (DR) à cet élément de fixation (EF).

2. Dispositif de rangement selon la revendication 1, **caractérisé en ce qu'**il comprend deux éléments de couplage (EC).

3. Dispositif de rangement selon la revendication 1 ou 2, **caractérisé en ce que** chaque élément de couplage (EC) est une sangle.

4. Dispositif de rangement selon la revendication 1 ou 2, **caractérisé en ce que** chaque élément de couplage (EC) est un crochet.

5. Dispositif de rangement selon l'une des revendications 1 à 4, **caractérisé en ce que** ledit outil (OV) est un cric associé à une manivelle.

6. Véhicule (V) comprenant au moins trois roues (RV) et un plancher (PV) sur lequel sont installées des premières parois (P1) délimitant un logement (LR) logeant des équipements, **caractérisé en ce qu'**il comprend en outre un élément de fixation (EF) installé fixement dans ledit logement (LR), et un dispositif de rangement (DR) selon l'une des revendications 1 à 5, logé dans ledit logement (LR) en étant solidarisé audit élément de fixation (EF).

7. Véhicule selon la revendication 6, **caractérisé en ce que** ledit élément de fixation (EF) est une barre.

8. Véhicule selon la revendication 6 ou 7, **caractérisé en ce qu'**il comprend, dans une partie supérieure dudit logement (LR), un cadre (CL) auquel sont solidarisés fixement ledit élément de fixation (EF) et lesdites premières parois (P1).

9. Véhicule selon la revendication 8, **caractérisé en ce que** ledit logement (LR) a une face supérieure masquée par une seconde paroi (P2) participant à la définition d'une assise et montée à rotation sur ledit cadre (CL).

10. Véhicule selon la revendication 9, **caractérisé en ce qu'**il comprend au moins un élément de verrouillage (EV) propre, lorsque ladite seconde paroi (P2) est placée dans une position rabattue contre ledit cadre (CL), à verrouiller cette seconde paroi (P2) dans cette position rabattue.
